(19) Europäisches Patentamt
European Patent Office
Office européen des brevets

(11) **EP 4 439 132 A1**

(12) **EUROPEAN PATENT APPLICATION**
published in accordance with Art. 153(4) EPC

(43) Date of publication:
**02.10.2024 Bulletin 2024/40**

(21) Application number: **22898543.8**

(22) Date of filing: **21.11.2022**

(51) International Patent Classification (IPC):
**G02B 1/115** (2015.01)    **C03C 17/34** (2006.01)
**C03C 17/42** (2006.01)    **G02B 1/18** (2015.01)
**G02B 5/02** (2006.01)    **G09F 9/00** (2006.01)

(52) Cooperative Patent Classification (CPC):
**C03C 17/34; C03C 17/42; G02B 1/115; G02B 1/18; G02B 5/02; G09F 9/00**

(86) International application number:
**PCT/JP2022/043072**

(87) International publication number:
**WO 2023/095760 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.11.2021 JP 2021192511**

(71) Applicant: **AGC INC.**
**Chiyoda-ku,**
**Tokyo 1008405 (JP)**

(72) Inventors:
• **INOKUCHI Tetsuro**
  **Yonezawa-shi, Yamagata 992-1128 (JP)**
• **NIINO Akihiko**
  **Yonezawa-shi, Yamagata 992-1128 (JP)**

(74) Representative: **Müller-Boré & Partner**
**Patentanwälte PartG mbB**
**Friedenheimer Brücke 21**
**80639 München (DE)**

(54) **TRANSPARENT SUBSTRATE WITH METAL OXIDE LAYERS AND METHOD FOR PRODUCING SAME**

(57)    The present invention relates to a transparent substrate with metal oxide layers, wherein: the transparent substrate has a first main surface and a second main surface; a first metal oxide layer is arranged on the first main surface; a second metal oxide layer is arranged on the second main surface; the first metal oxide layer is an antireflection layer; the first metal oxide layer has a thickness of 200 nm to 400 nm; and the thickness of the second metal oxide layer is more than 0% but less than 5.0% of the thickness of the first metal oxide layer.

*FIG. 1*

**Description**

TECHNICAL FIELD

The present invention relates to a transparent substrate with a metal oxide layer and a method for producing the transparent substrate with a metal oxide layer.

BACKGROUND ART

In recent years, image display devices are increasingly being used in various devices such as navigation systems and speedometers mounted on vehicles. From the viewpoint of safety and an improved appearance, properties of a cover member of such an image display device are required to reduce reflection of external light and to prevent an image from being difficult to be seen due to the reflection of the external light on a screen. As means for preventing reflection and reflection on the surface of the cover member, an antireflection technique that reduces surface reflection is known (for example, Patent Literature 1). As the antireflection technique, it has been proposed to provide an antireflection layer that reduces light reflection at an interface between a laminate and air by laminating several metal oxide layers having appropriate refractive index and optical film thickness as an optical interference layer. It is also known to provide a functional layer such as an antifouling layer or an antiglare layer on or above the surface of the cover member in addition to the antireflection layer.

These functional layers including the antireflection layer are generally formed only on or above a main surface of the cover member that is not bonded to a display. In this case, since the film is formed by fixing the main surface to be bonded to the display on a carrier substrate side, a protective film is generally provided on or above the main surface to be bonded to the display in order to prevent scratches due to contact with the carrier substrate. However, when an adhesive of the protective film remains on the main surface, a contact angle on the main surface increases, resulting in a problem that bonding defects with the display may occur.

CITATION LIST

PATENT LITERATURE

Patent Literature 1: JP2018-083748A

SUMMARY OF INVENTION

TECHNICAL PROBLEM

The present invention has been made in view of the above circumstance, and an object thereof is to provide a transparent substrate with a metal oxide layer that prevents occurrence of bonding defects with a display and that has high antireflection performance at the same time, and a method for producing a transparent substrate with a metal oxide layer.

SOLUTION TO PROBLEM

The present invention provides a transparent substrate with a metal oxide layer, including: a transparent substrate having a first main surface and a second main surface; a first metal oxide layer on or above the first main surface; and a second metal oxide layer on or above the second main surface, in which the first metal oxide layer is an antireflection layer, the first metal oxide layer has a thickness of 200 nm to 400 nm, and the second metal oxide layer has a thickness more than 0% and less than 5.0% of the thickness of the first metal oxide layer.

The present invention provides a method for producing a transparent substrate with a metal oxide layer, including:

preparing a transparent substrate having a first main surface and a second main surface;
bringing a part of the second main surface into contact with a jig and fixing the transparent substrate to the jig; and
forming a first metal oxide layer on or above the first main surface and a second metal oxide layer on or above the second main surface by using a metal oxide layer raw material provided to face the first main surface, in which the formation is carried out such that the first metal oxide layer is an antireflection layer, the first metal oxide layer has a thickness of 200 nm to 400 nm, and the second metal oxide layer has a thickness more than 0% and less than 5.0% of the thickness of the first metal oxide layer.

ADVANTAGEOUS EFFECTS OF INVENTION

According to the transparent substrate with a metal oxide layer and the method for producing the transparent substrate described in the present invention, it is possible to prevent occurrence of bonding defects between a transparent substrate and a display, and at the same time achieve high antireflection performance.

BRIEF DESCRIPTION OF DRAWINGS

[FIG. 1] FIG. 1 is a schematic diagram showing a transparent substrate with a metal oxide layer according to an embodiment.
[FIG. 2] FIG. 2 is a schematic diagram showing a transparent substrate with a metal oxide layer according to an embodiment.
[FIG. 3] FIG. 3 is a schematic diagram showing a transparent substrate with a metal oxide layer according to an embodiment.
[FIG. 4] FIG. 4 is a schematic diagram showing a transparent substrate with a metal oxide layer according to a modification.
[FIG. 5] FIG. 5 is a schematic diagram showing a transparent substrate with a metal oxide layer according to a modification.
[FIGS. 6A and 6B] FIGS. 6A and 6B are each a schematic diagram showing a step in a method for producing a transparent substrate with a metal oxide layer according to an embodiment.
[FIG. 7] FIG. 7 is a flow chart showing steps in a method for producing a transparent substrate with a metal oxide layer according to an embodiment.

DESCRIPTION OF EMBODIMENTS

Preferred embodiments of the present invention will be described below in detail with reference to the accompanying drawings. Note that, the present invention is not limited to the present embodiment and also includes a combination of embodiments when there are a plurality of embodiments. In addition, numerical values include rounding ranges.

(Transparent Substrate with Metal Oxide Layer)

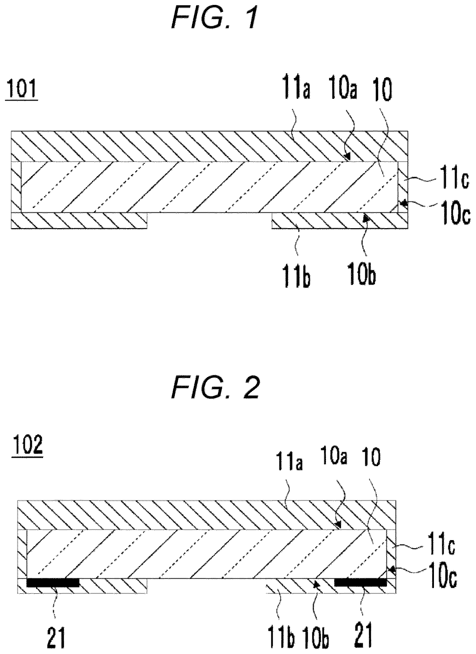

FIG. 1 is a schematic diagram showing a transparent substrate with a metal oxide layer according to an embodiment. As shown in FIG. 1, a transparent substrate with a metal oxide layer 101 according to the present embodiment includes a transparent substrate 10, a first metal oxide layer 11a formed on a first main surface 10a of the transparent substrate 10, a second metal oxide layer 11b formed on a second main surface 10b of the transparent substrate 10, and a metal oxide layer 11c formed on a side surface 10c connecting the first main surface 10a and the second main surface 10b. Here, the first metal oxide layer 11a is an antireflection layer.

Further, in the transparent substrate with a metal oxide layer 101, the second metal oxide layer 11b is present only on a part of the second main surface 10b. In other words, the second main surface 10b has a region where the metal oxide layer is not present. In steps S102 and S103 in a method for producing a transparent substrate with a metal oxide layer to be described later, the transparent substrate 10 is fixed by bringing a part of the second main surface 10b into contact with a jig, and a metal oxide layer is formed. At this time, the part in contact with the jig is a region where no metal oxide layer is formed, and the second metal oxide layer 11b is formed in the part of the second main surface 10b not in contact with the jig. In this way, having a region where no metal oxide layer is formed is preferred since the first metal oxide layer 11a and the second metal oxide layer 11b can be formed at the same time in one film formation. Note that, the present invention is not limited to this, and the second metal oxide layer 11b may be formed over the entire second main surface 10b.

The first metal oxide layer 11a is an antireflection layer, and the thickness of the first metal oxide layer 11a is 200 nm or more and 400 nm or less. When the thickness of the first metal oxide layer 11a is within this range, a luminous reflectance on a surface of the transparent substrate with a metal oxide layer 101 on a first main surface 10a side can be sufficiently reduced.

When the luminous reflectance on the surface on the first main surface 10a side is preferably 5.0% or less, an effect of reducing the reflectance is provided, glare caused by reflected light is reduced, and in the case where the transparent substrate with a metal oxide layer 101 is used in an image display device, a transmittance of light from the image display device can be improved, and visibility of the image display device can be improved.

The thickness of the second metal oxide layer 11b is more than 0% and less than 5.0% of the thickness of the first metal oxide layer 11a. When the thickness of the second metal oxide layer 11b is within this range, a contact angle on the second main surface 10b can be reduced to eliminate bonding defects with a display, and an increase in luminous reflectance measured on the surface of the transparent substrate with a metal oxide layer 101 on the first main surface 10a side can be prevented. Note that, for a specific method of measuring the luminous reflectance, please see Examples.

Further, in an embodiment in which the second metal oxide layer 11b is present only on a part of the second main surface 10b, such as the transparent substrate with a metal oxide layer 101, when the thickness of the second metal oxide layer 11b is within the above range, a color difference in the first main surface 10a of the transparent substrate with a metal oxide layer 101 can be prevented.

The thickness of the second metal oxide layer 11b is preferably 0.1% or more of the thickness of the first metal oxide layer 11b. When the thickness of the second metal oxide layer 1 1b is within this range, on the second main surface 10b, the second metal oxide layer 11b can be formed without unevenness, and bonding defects with a display can be easily prevented. On the other hand, the thickness of the second metal oxide layer 11b is preferably 4.0% or less, more preferably 3.0% or less, and still more preferably 2.0% or less of the thickness of the first metal oxide layer 11a. When the thickness of the second metal oxide layer 11b is within this range, an increase in luminous reflectance of the transparent substrate 10 can be prevented.

Here, the thickness of the second metal oxide layer may be very small. A verification method in such a case will be described later.

The contact angle in the present description is evaluated using, in particular, a contact angle with water.

A maximum value of the water contact angle on a printed layer on the second main surface 10b is preferably 50° or less, more preferably 40° or less, and still more preferably 35° or less. The printed layer will be described later. When the maximum value of the water contact angle on the printed layer on the second main surface 10b is within this range, bondability with a display can be improved over the entire second main surface 10b. On the other hand, the water contact angle on the printed layer on the second main surface 10b is, for example, more than 0°, and is generally 0.1° or more. Note that, for a specific method of measuring the maximum value of the water contact angle, please see Examples.

Here, the color difference in the first main surface 10a is a color difference ΔE in an L*a*b color system.

Any one point on the second main surface 10b selected from a region where the second metal oxide layer 11b is not present, and among a region where the second metal oxide layer 11b is present, any one point selected from, on the second main surface 10b, a region within 10 nm from the region where the second metal oxide layer 1 1b is not present are selected, and the color difference ΔE between reflection colors (a*, b*) at two points on the first main surface corresponding to these two points is determined by

$$\Delta E = \{(\Delta L^*)^2 + (\Delta a^*)^2 + (\Delta b^*)^2\}^{1/2}.$$

When the color difference ΔE is preferably 1.5 or less, and more preferably 0.8 or less, a variation in color in the first main surface 10a can be prevented. Here, the reason why the color difference is measured in a region within 10 mm is that it is easier to recognize a change in color in the case where a color difference occurs at two nearby points than the case where a color difference occurs at two distant points.

An area of the second metal oxide layer 11b is preferably 50% or more of an area of the second main surface 10b. The area of the second metal oxide layer 11b is more preferably 60% or more, and still more preferably 70% or more of the area of the second main surface 10b. When the area of the second metal oxide layer 11b is within this range, since a sufficient region with a small contact angle can be ensured on the second main surface 10b, bonding defects with a display can be easily eliminated. On the other hand, the area of the second metal oxide layer 11b is preferably 99% or less, more preferably 90% or less, and still more preferably 85% or less of the area of the second main surface 10b. It is preferable that the area of the second metal oxide layer 11b be within this range since the region where the metal oxide layer is not present can be ensured, and an area for fixing the transparent substrate 10 using the jig in the above production method can be ensured.

The providing position of the region where the metal oxide layer is not present is not particularly limited, and may be, for example, at a center of the second main surface 10b, or at a periphery portion of the second main surface 10b.

The number of the region where the metal oxide layer is not present is not particularly limited, and may be one or more.

The shape of the region where the metal oxide layer is not present is not particularly limited, and may be, for example, rectangular, circular, elliptical, or polygonal.

Further, the transparent substrate with a metal oxide layer 101 preferably has the metal oxide layer 11c also on the side surface 10c connecting the first main surface 10a and the second main surface 10b. The metal oxide layer 11c can prevent generation of microcracks on the side surface 10c. It is preferable to prevent the microcracks since the microcracks can be prevented from growing and being a starting point of cracks, and generation of cracks can be remarkably prevented in subsequent steps such as assembly into a display and a display device casing. Note that, the present invention is not limited to this, and the metal oxide layer 11c may not be formed.

In the following paragraphs, each layer of the transparent substrate with a metal oxide layer according to the present embodiment will be described in detail.

(Transparent Substrate)

The transparent substrate 10 is not particularly limited as long as it is made of a transparent material that is generally required to have low reflectivity through a metal oxide layer. For example, those made of a glass, a resin, or a combination thereof (a composite material, a laminated material or the like) are preferably used. In addition, the shape of the transparent substrate 10 is not particularly limited, and may be, for example, a rigid plate shape, or a flexible film shape.

Examples of a resin substrate used as the transparent substrate 10 include acrylic resin substrates such as polymethyl methacrylate, aromatic polycarbonate resin substrates such as bisphenol A carbonate, and aromatic polyester resin substrates such as polyethylene terephthalate.

Examples of a polymer film (film-like transparent substrate 10) include polyester films such as polyethylene terephthalate, polyolefin films such as a polypropylene, a polyvinyl chloride film, an acrylic resin film, a polyether sulfone film, a polyarylate film, and a polycarbonate film.

Examples of a glass substrate used as the transparent substrate 10 include a substrate made of a glass such as a common glass whose main component is silicon dioxide, for example, a soda lime silicate glass, an aluminosilicate glass, a borosilicate glass, an alkali-free glass, and a quartz glass.

In the case where a glass substrate is used as the transparent substrate 10, the composition of the glass is preferably a composition that can be strengthened by molding or a chemical strengthening treatment, and preferably contains sodium.

The composition of the glass is not particularly limited, and glasses having various compositions can be used. For example, an aluminosilicate glass having the following composition expressed in mol % in terms of oxide is mentioned. (i) a glass containing 50% to 80% of $SiO_2$, 2% to 25% of $Al_2O_3$, 0% to 20% of $Li_2O$, 0% to 18% of $Na_2O$, 0% to 10% of $K_2O$, 0% to 15% of $MgO$, 0% to 5% of $CaO$, 0% to 5% of $Y_2O_3$, and 0% to 5% of $ZrO_2$, (ii) a glass containing 50% to 74% of $SiO_2$, 1% to 10% of $Al_2O_3$, 6% to 14% of $Na_2O$, 3% to 11% of $K_2O$, 2% to 15% of $MgO$, 0% to 6% of $CaO$, and 0% to 5% of $ZrO_2$, in which a total content of $SiO_2$ and $Al_2O_3$ is 75% or less, a total content of $Na_2O$ and $K_2O$ is 12% to 25%, and a total content of $MgO$ and $CaO$ is 7% to 15%, (iii) a glass containing 68% to 80% of $SiO_2$, 4% to 10% of $Al_2O_3$, 5% to 15% of $Na_2O$, 0% to 1% of $K_2O$, 4% to 15% of $MgO$, and 0% to 1% of $ZrO_2$, and (iv) a glass containing 67% to 75% of $SiO_2$, 0% to 4% of $Al_2O_3$, 7% to 15% of $Na_2O$, 1% to 9% of $K_2O$, 6% to 14% of $MgO$, and 0% to 1.5% of $ZrO_2$, in which a total content of $SiO_2$ and $Al_2O_3$ is 71% to 75%, a total content of $Na_2O$ and $K_2O$ is 12% to 20%, and in the case where $CaO$ is contained, a content thereof is less than 1%.

In the case where a glass is used as the transparent substrate 10, a chemically strengthened glass is preferred in order to increase the strength of the obtained substrate.

In the case where the transparent substrate 10 is a chemically strengthened glass, a surface compressive stress (hereinafter referred to as CS) of the transparent substrate 10 is preferably 400 MPa or more and 1200 MPa or less, and more preferably 700 MPa or more and 900 MPa or less. When CS is 400 MPa or more, the transparent substrate 10 has sufficient strength for practical use. When CS is 1200 MPa or less, the transparent substrate 10 can withstand the own compressive stress, and there is no risk of spontaneous destruction. In the case where the transparent substrate with a metal oxide layer 101 according to the present embodiment is used as a front substrate (cover glass) of a display device, it is particularly preferable that CS of the transparent substrate be 700 MPa or more and 850 MPa or less.

Further, a stress layer depth (hereinafter referred to as DOL) of the transparent substrate 10 is preferably 15 μm to 50 μm, and more preferably 20 μm to 40 μm. When DOL is 15 μm or more, even when a sharp jig such as a glass cutter is used, there is no risk that it is easily scratched and destroyed. When DOL is 50 μm or less, the transparent substrate 10 can withstand the own compressive stress, and there is no risk of spontaneous destruction. In the case where the transparent substrate with a metal oxide layer 101 according to the present embodiment is used as a front substrate (cover glass) of a display device or the like, it is particularly preferable that DOL of the transparent substrate 10 be 25 μm or more and 35 μm or less.

A thickness of the transparent substrate 10 can be appropriately selected depending on the application. For example, in the case of a resin substrate, a glass substrate, or the like, the thickness is preferably 0.2 mm to 5 mm, and more preferably 0.2 mm to 3 mm.

In the case of using a glass substrate as the transparent substrate 10 and performing the above chemical strengthening treatment, in order to effectively perform the above, the thickness of the transparent substrate is generally preferably 5 mm or less, more preferably 3 mm or less, and still more preferably 2 mm or less. In the case of using a glass substrate, in order to ensure the strength, the thickness of the transparent substrate is preferably 0.2 mm or more, more preferably 0.8 mm or more, and still more preferably 1 mm or more.

In the case where the transparent substrate 10 is a glass substrate, dimensions can be appropriately selected depending on the application. For example, in the case of being used as a cover glass for an in-vehicle display device, a length of a short side is, for example, 50 mm or more and 500 mm or less, and preferably 100 mm or more and 300 mm or less, and a length of a long side is, for example, 50 mm or more and 1500 mm or less, and preferably 100 mm or more and 1200 mm or less.

The shape of the transparent substrate 10 is not limited to a flat shape as shown in the drawings, and may also be a shape having a curved surface such as a substrate having one or more bent portions. Recently, among various devices (televisions, personal computers, smartphones, car navigation systems, or the like) equipped with image display devices, devices in which the display surface of the image display device is a curved surface have appeared.

In the case where the transparent substrate 10 has a curved surface, the entire surface of the transparent substrate 10 may be composed of a curved surface, or may be composed of a curved surface portion and a flat portion. Examples of a case where the entire surface is a curved surface include a case where the cross section of the transparent substrate 10 is arcuate.

In the case where the transparent substrate 10 has a curved surface, a radius of curvature (hereinafter also referred to as R) thereof can be appropriately set depending on the application, type, or the like of the transparent substrate 10, and is not particularly limited, and is preferably 50 mm or more, more preferably 100 mm or more, and still more preferably 200 mm or more. The radius of curvature is, for example, 10000 mm or less, preferably 5000 mm or less, and more preferably 3000 mm or less. When R is equal to or less than the above upper limit value, the design is excellent compared to a flat plate. When R is equal to or more than the above lower limit value, a functional layer can be uniformly formed even on a curved surface.

(Antireflection Layer)

The first metal oxide layer 11a on the first main surface 10a is formed, for example, as an antireflection layer. The antireflection layer is a layer that can provide an effect of reducing the luminous reflectance, can reduce glare caused by reflected light, and in the case where the transparent substrate with a metal oxide layer 101 is used in an image display device, can improve the transmittance of light from the image display device and the visibility of the image display device.

The first metal oxide layer 11a functioning as an antireflection layer may have any configuration as long as it can prevents reflection of light. For example, it is possible to have a configuration in which high refractive index layers having a refractive index of 1.9 or more at a wavelength of 550 nm and low refractive index layers having a refractive index of 1.6 or less at a wavelength of 550 nm are alternately laminated. The number of the low refractive index layers and the high refractive index layers is not particularly limited, and the total number is, for example, 1 or more and 30 or less layers, preferably 12 or less layers, and more preferably 8 or less layers. The low refractive index layer preferably has 1 or more and 6 or less layers, and more preferably 2 or more and 4 or less layers. The high refractive index layer preferably has the same number of layers as the low refractive index layer.

In the case where the first metal oxide layer 11a functioning as an antireflection layer is composed of a plurality of low refractive index layers and a plurality of high refractive index layers, for example, 6 layers of low refractive index layers and high refractive index layers, when the layer farthest from the transparent substrate 10 is the outermost layer and the number of the layers is counted from the outermost layer, as the first layer, to the transparent substrate side, it is preferable that odd-numbered layers including the outermost layer, that is, the outermost layer, the third layer, and the fifth layer, be low refractive index layers. When the layer adjacent to the transparent substrate side from the outermost layer is the second layer, it is preferable that even-numbered layers including the second layer, that is, the second layer, the fourth layer, and the sixth layer, be high refractive index layers. That is, it is preferable that the sixth layer, which is a high refractive index layer farthest from the outermost layer, be in contact with the transparent substrate 10.

In the case where each of the low refractive index layer and the high refractive index layer is composed of one layer, it is preferable that the low refractive index layer be the outermost layer and the high refractive index layer be the second layer.

A thickness of the outermost layer of the antireflection layer is preferably 60 nm or more and 130 nm or less, and more preferably 70 nm or more and 120 nm or less. When the thickness of the outermost layer is 60 nm or more, desired antireflection properties can be obtained, and when the thickness of the outermost layer is 130 nm or less, the outermost layer is less likely to peel off due to a stress.

Examples of measurement for the thickness of the outermost layer include measurement of an actual film thickness by cross-sectional observation using SEM (scanning electron microscopy) or TEM (transmission electron microscopy), or optical measurements using a polarization analysis method. In the case of applying an antiglare treatment, it is preferable to measure the actual film thickness using SEM or TEM. In addition, in the case where the refractive index of each layer is known, the film thickness can be derived from a spectral reflectance or a transmittance (Reference: "Academic Thin Films and Film Forming Technology" Author: Lee Jeong-jung, Translator: ULVAC, Publisher: AGNE Technology Center, Publication year: 2002). In particular, in the case where the refractive index of each layer is known, it is preferable to measure the film thickness using the spectral reflectance.

The method for measuring the thickness of the outermost layer can also be applied to measuring a thickness of the entire antireflection layer, each layer of the antireflection layer, and an antifouling layer. Since the antifouling layer is very thin, it is preferable to remove a part of the antifouling layer using a method to be described later and then derive the film thickness by observing a difference using optical measurement (Reference: Paragraphs [0125] to [0129] of WO2016/068112).

The low refractive index layer is preferably made of a material containing silicon, for example. For example, it may be silicon oxide, aluminum-doped silicon oxide in which silicon oxide is doped with aluminum, or a material in which tin or zirconia is added to silicon oxide.

In the case where the second layer is a high refractive index layer, a main component of the high refractive index layer is preferably one or more selected from, for example, silicon nitride, titanium oxide, niobium oxide, tantalum oxide, and zirconium oxide. Further, among these materials, from the viewpoint of productivity and the refractive index, silicon nitride, niobium oxide, and tantalum oxide are more preferred, and niobium oxide is most preferred.

Main components of the even-numbered layers of the fourth layer and thereafter, for example, main components of the fourth layer and the sixth layer, may be made of a material same as that of the second layer, or made of a material different from that of the second layer. For example, in the case where the main component of the second layer is niobium oxide, the even-numbered layers of the fourth layer and thereafter may be made of niobium oxide as the second layer, or may be made of a different material from that of the second layer.

Note that, the antireflection layer may have a different total number of high refractive index layers and low refractive index layers, and in the case where the total number is different, for example, the outermost layer and the layer in contact with the transparent substrate are preferably low refractive index layers, and the main component of the low refractive index layer in contact with the transparent substrate is preferably silicon oxide.

(Printed Layer)

A transparent substrate with a metal oxide layer according to the present embodiment may further include a printed layer. FIG. 2 is a schematic diagram showing a transparent substrate with a metal oxide layer according to an embodiment, which has a configuration further including a printed layer in addition to the configuration shown in FIG. 1. As shown in FIG. 2, a transparent substrate with a metal oxide layer 102 according to the present embodiment includes a printed layer 21 between the second main surface 10b of the transparent substrate 10 and the second metal oxide layer 11b.

In FIG. 2, the transparent substrate with a metal oxide layer 102 includes the printed layer 21 on a periphery portion of the second main surface 10b. The printed layer 21 is provided to hide a wiring circuit disposed near an outer periphery of a display device of a mobile device, or an adhesion portion between a casing of the mobile device and the transparent substrate with a metal oxide layer 102 to improve, for example, the visibility and aesthetics of display. Here, the periphery portion means a band-shaped region having a predetermined width from the outer periphery toward the center. The printed layer 21 may be provided all around a periphery of the second main surface 10b, or may be provided on a part of the periphery.

An outer periphery of the printed layer 21 may be in contact with the periphery portion of the second main surface 10b, that is, a boundary between the second main surface 10b and the side surface 10c, or may be located in an inner side of the boundary between the second main surface 10b and the side surface 10c. Here, the "outer periphery" of the printed layer 21 means an outer edge of the printed layer 21, and an "inner periphery" of the printed layer 21 means an inner edge of the printed layer 21.

At this time, the second metal oxide layer 11b is preferably present on most of the printed layer 21. Since the water contact angle on the printed layer 21 tends to be higher than that on a region where the printed layer 21 is not present (hereinafter referred to as an opening), when the second metal oxide layer 11b is formed to cover the printed layer 21, the water contact angle on the printed layer 21 can be reduced and the bonding defects can be reduced. Note that, "most of" is, for example, more than 50%, preferably more than 80%, more preferably 90% or more, and still more preferably 95% or more of an area of the printed layer 21. Further, it is more preferable that the second metal oxide layer 11b be present over a region from the periphery portion of the second main surface 10b to an inner side of the inner periphery of the printed layer 21. That is, it is preferable that the second metal oxide layer 11b be present on the printed layer 21 and even in a region (opening) in the inner side of the inner periphery of the printed layer 21. In this way, the contact angle can also be reduced at the opening, and the bonding defects can be remarkably prevented.

A width of the printed layer 21 can be appropriately set, for example, to a width that can hide the above wiring circuit and adhesion portion. Further, the color of the printed layer 21 can be selected as desired depending on the purpose. The printed layer 21 is formed by a method of performing printing using an ink or the like.

An organic ink is a composition containing a dye or pigment having a desired color and an organic resin. Examples of the organic resin include resins made of homopolymers such as an epoxy resin, an acrylic resin, polyethylene terephthalate, polyether sulfone, a polyarylate, a polycarbonate, an acrylonitrile-butadiene-styrene (ABS) resin, a phenolic resin, a transparent ABS resin, a polyurethane, polymethyl methacrylate, polyvinyl, polyvinyl butyral, polyetheretherketone, a polyethylene, a polyester, a polypropylene, a polyamide, and a polyimide, and copolymers of these resin monomers and copolymerizable monomers.

Among the above inorganic ink and organic ink, it is preferable to use an organic ink because of a low drying temperature. From the viewpoint of chemical resistance, an organic ink containing a pigment is preferred.

(Antifouling Layer)

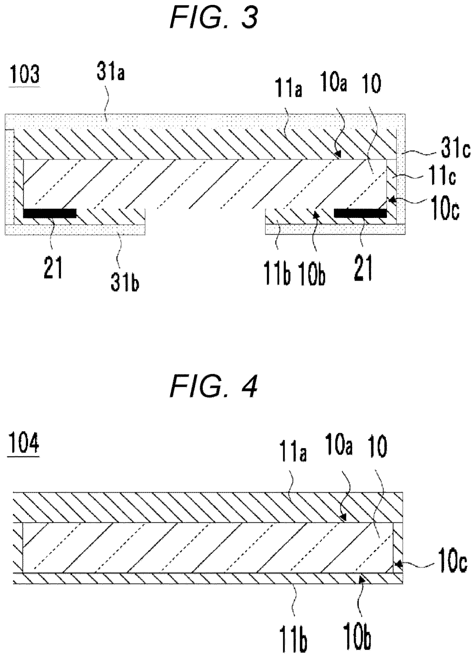

A transparent substrate with a metal oxide layer according to the present embodiment may further include an antifouling layer. FIG. 3 is a schematic diagram showing a transparent substrate with a metal oxide layer according to an embodiment, which has a configuration further including an antifouling layer in addition to the configuration shown in FIG. 2. As shown in FIG. 3, a transparent substrate with a metal oxide layer 103 according to the present embodiment includes antifouling layers on the metal oxide layers. More specifically, a first antifouling layer 31a formed on the first metal oxide layer 11a, a second antifouling layer 31b formed on the second metal oxide layer 11b, and an antifouling layer 31c formed on the metal oxide layer 11c formed on the side surface are included.

The antifouling layer is a layer that prevents adhesion of organic substances or inorganic substances to the surface, or a layer that provides the effect that even when organic substances or inorganic substances adhere to the surface, the adhering substances can be easily removed by cleaning such as wiping.

The antifouling layer may be any layer as long as it has water and oil repellency and can impart antifouling properties to the obtained transparent substrate 10, for example. For example, the antifouling layer contains a compound containing fluorine, preferably a compound having a fluorine-containing organic group, and more preferably made of a fluorine-containing organosilicon compound film obtained by curing a fluorine-containing organosilicon compound containing a fluorine-based silane coupling material by a hydrolytic condensation reaction.

A thickness of the first antifouling layer 31a is preferably 2 nm or more and 20 nm or less, more preferably 2 nm or more and 15 nm or less, still more preferably 2 nm or more and 10 nm or less, even more preferably 2 nm or more and 8 nm or less, particularly preferably 2 nm or more and 6 nm or less, and extremely preferably 4 nm. When the thickness is 2 nm or more, the first main surface 10a is uniformly covered with the first antifouling layer 31a, which makes it practical from the viewpoint of scratch resistance. When the thickness is 20 nm or less, optical properties of the transparent substrate 10 with the first antifouling layer 31a formed thereon, such as a haze value, are favorable.

In the case of forming the second antifouling layer 31b, a thickness of the second antifouling layer 31b is, for example, 1 nm or less, and preferably closer to 0 nm. However, the thickness of the second antifouling layer 3 1b is very thin, and it is difficult to accurately measure the thickness. Therefore, in the case where the antifouling layer contains a compound having a fluorine-containing organic group, a F/Si value determined by the following measuring method, for example, can be used as means of determining the amount of the antifouling layer formed.

(Method for Measuring F/Si Value)

A value obtained by dividing a F intensity value by a Si intensity value obtained under the following conditions by using an X-ray photoelectron spectrometer (XPS) is defined as the F/Si value.

(Measurement conditions) Source: Mg K$\alpha$; Output: 12 kV, 25 mA; Detection angle: 90°; Sample tilt: 0°; Measurement area: about 6 mm$^2$

The F/Si value measured on the second main surface 10b is preferably 0.08 or less, and more preferably 0.05 or less. The closer it is to 0, the more preferred it is. On the other hand, the F/Si value may be more than 0, for example, and when it is more than 0, in the method for producing a transparent substrate with a metal oxide layer to be described later, the antifouling layer can be formed by fixing the second main surface 10b to a jig, which has an advantage of simplifying the production process. When the F/Si value is within this range, the contact angle on the second main surface 10b can be reduced, and the bonding defects with a display can be prevented.

It is preferable that the antifouling layer 31c be also formed on the metal oxide layer 11c on the side surface 10c. The antifouling layer 31c can prevent generation of microcracks on the side surface 10c. When the generation of the microcracks is prevented, since the microcracks can be prevented from growing and being a starting point of cracks, generation of cracks can be remarkably prevented in subsequent steps such as assembly into a display and a display device casing.

(Antiglare Layer)

The transparent substrate with a metal oxide layer may include an antiglare layer between the first main surface 10a and the metal oxide layer 11a. The antiglare layer is formed, for example, by subjecting the first main surface 10a to a surface treatment using a chemical method or a physical method to form an uneven shape with a desired surface roughness. In addition, it is formed by applying or spraying a coating liquid for an antiglare film onto the first main surface 10a, depositing the antiglare film on the first main surface 10a, and imparting an uneven shape.

In the case where the first main surface 10a of the transparent substrate 10 has an uneven shape, the lower limit value of a root mean square roughness (RMS) on the surface of the metal oxide layer 11a or the surface of the first antifouling layer 31a is preferably 10 nm or more, and more preferably 20 nm or more. The upper limit value is preferably 1500 nm or less, more preferably 1000 nm or less, still more preferably 500 nm or less, and particularly preferably 200 nm or less. When RMS is within the above range, peeling of the antifouling layer is prevented and abrasion resistance is improved, and glare prevention properties or antiglare properties can be obtained.

Here, since the surface roughness of the metal oxide layer or the antifouling layer is sufficiently smooth, the RMS value measured by the above method in the presence of the metal oxide layer or the antifouling layer may be considered to be the same value as the RMS on the first main surface 10a having an uneven shape.

Note that, the root mean square roughness (RMS) can be measured according to the method specified in JIS B 0601:(2001). As a method of measuring RMS, specifically, a viewing range of 300 $\mu$m $\times$ 200 $\mu$m is set with respect to a measurement surface of the transparent substrate 10 which is a sample after an antiglare treatment, and height information of the transparent substrate 10 is measured using a laser microscope (product name: VK-9700, manufactured by Keyence Corporation). RMS can be calculated by performing cutoff correction on the measured value and determining the root mean square of the obtained heights. It is preferable to use 0.08 mm as the cutoff value. The haze value is a value measured according to the regulations in JIS K 7136:(2000).

When the first main surface 2 having an uneven shape is observed from above, circular holes are observed. The size of the circular holes observed in this way, that is, the diameter in terms of a perfect circle, is preferably 5 $\mu$m to 50 $\mu$m. Within such a range, both glare prevention properties and antiglare properties of the transparent substrate 10 can be obtained.

(Modification)

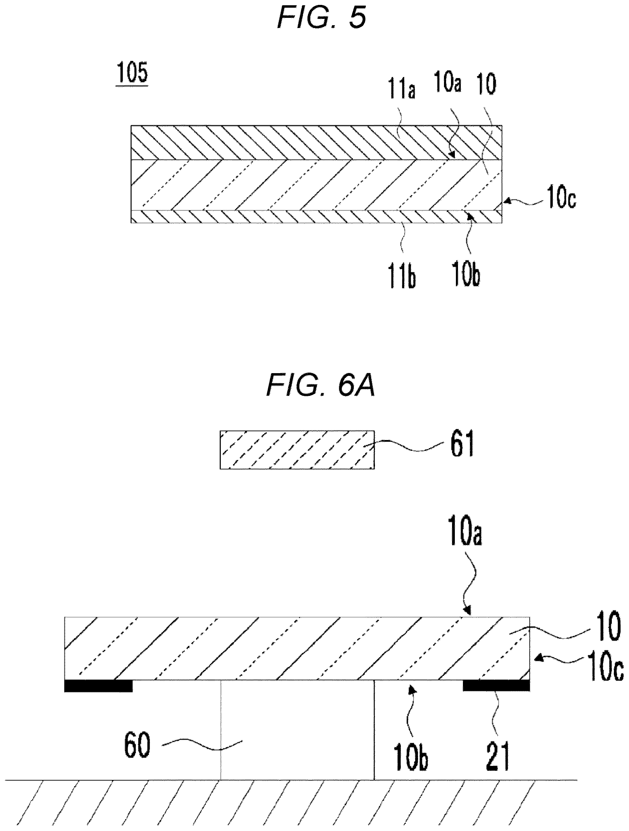

FIG. 4 and FIG. 5 are each a schematic diagram showing a transparent substrate with a metal oxide layer according to a modification. As shown in FIG. 4, a transparent substrate with a metal oxide layer 104 may have the second metal oxide layer 11b formed over the entire second main surface 10b. Here, the entire surface refers to occupying more than 99% of the area of the second main surface 10b.

As shown in FIG. 5, in a transparent substrate with a metal oxide layer 105, a metal oxide layer may not be formed on the side surface 10c.

(Method for Measuring Thickness of Second Metal Oxide Layer)

Since the second metal oxide layer is very thin, it may be difficult to measure the thickness thereof. Hereinafter, a method for confirming that the thickness of the second metal oxide layer is less than 5.0% of the thickness of the first metal oxide layer will be described. Here, in thickness measurement, it is preferable to adopt an average value of measurement results at a plurality of points (for example, 9 points) selected without bias in the region where the second metal oxide layer is present. Note that, the method for measuring the thickness of the second metal oxide layer is not limited to the following.

(1) Method using film thickness step meter

In the case where a boundary between the region where the second metal oxide layer is present and the region where the second metal oxide layer is not present can be identified, it is preferable to measure the thickness using a film thickness step meter. As the film thickness step meter, for example, a stylus profiling system (for example, Dektak manufactured by BRUKER) is used.

(2) Method using X-ray fluorescence (XRF)

In the case where the thickness of the second metal oxide layer is 10 nm or more, a method of measuring the thickness using X-ray fluorescence is preferred. In the case where the first metal oxide layer is an antireflection layer, it is preferable to have a structure in which a high refractive index layer and a low refractive index layer are laminated.

As a standard sample, a substrate with a single-layer film is prepared using a material used for a high refractive index layer, and, for example, three types of samples having different film thicknesses of the single-layer film are prepared. X-ray fluorescence measurement is performed on these samples, and a relationship between the obtained peak intensity and the film thickness is plotted on a straight line to obtain a conversion straight line between the film thickness and the peak intensity. Thereafter, the film thickness can be estimated by performing X-ray fluorescence measurement on the second main surface of the transparent substrate to be measured and comparing the measured value with the conversion straight line.

(3) Method using X-ray photoelectron spectroscopy (XPS)

In the case where the thickness of the second metal oxide layer is less than 10 nm, a method of estimating the thickness using X-ray photoelectron spectroscopy is preferred. In the case where the first metal oxide layer is an antireflection layer, it is preferable to have a structure in which a high refractive index layer and a low refractive index layer are laminated. In the case where the thickness is measured by X-ray photoelectron spectroscopy on the second main surface of the transparent substrate to be measured and a peak of a material element used for the high refractive index layer is observed, the presence of the second metal oxide layer can be confirmed. Further, in the case where a peak due to an element not used in the first metal oxide layer, for example, aluminum or potassium, is observed, it is estimated that the thickness of the second metal oxide layer is less than 10 nm. This is a confirmation method that uses the fact that the range measured by X-ray photoelectron spectroscopy is 7 nm to 10 nm or less from the surface to be measured.

(Display Device)

The transparent substrate with a metal oxide layer as described above can be used as a cover glass for a display. In the case of being used as a cover glass for a display, the second main surface is bonded to a display via an adhesive layer. That is, a display device according to the present embodiment includes the above transparent substrate with a metal oxide layer and a display, and a second main surface side of the transparent substrate with a metal oxide layer is bonded to the display. With the transparent substrate with a metal oxide layer according to the present embodiment, bonding defects with the display can be eliminated.

The adhesive layer is not particularly limited, and it is preferably transparent and has a small difference in refractive index with a chemically strengthened glass. For example, a layer made of a transparent resin obtained by curing a liquid curable resin composition can be mentioned. Examples of the curable resin composition include a photocurable resin composition, and a thermosetting resin composition. Among these, a photocurable resin composition containing a curable compound and a photopolymerization initiator is preferred. The curable resin composition is applied using, for example, a method such as a die coater or a roll coater to form a curable resin composition film. On the other hand, the adhesive layer may be an OCA film (OCA tape).

The display device including the transparent substrate with a metal oxide layer according to the present embodiment and a display can be used, for example, in an in-vehicle car navigation system or a portable terminal such as a smartphone.

(Method for Producing Transparent Substrate with Metal Oxide Layer)

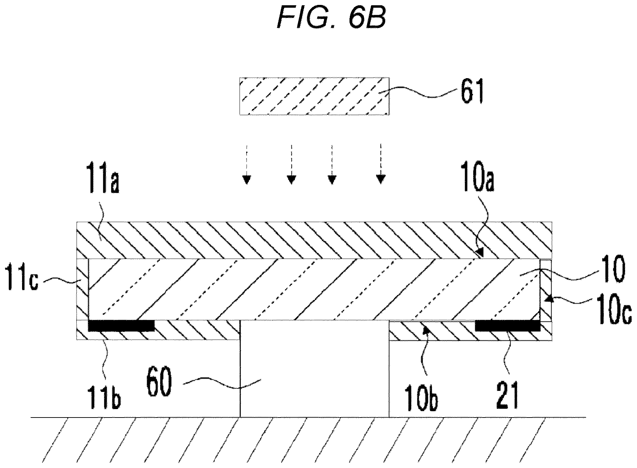

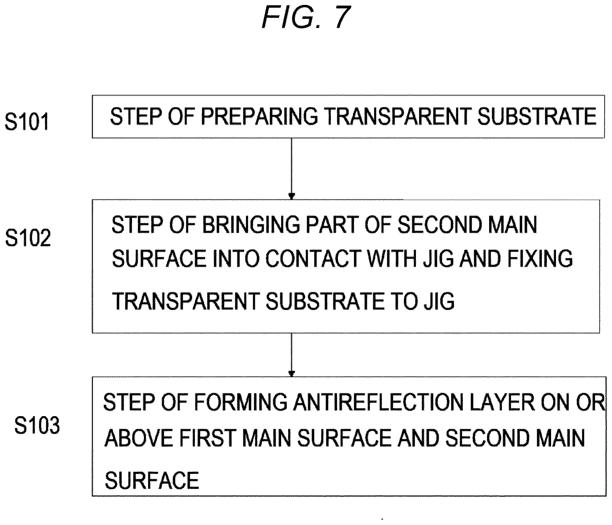

FIG. 7 is a flow chart showing steps in a method for producing a transparent substrate with a metal oxide layer according to an embodiment. FIGS. 6A and 6B are each a schematic diagram showing a state where the transparent substrate with a metal oxide layer is produced in the production method according to the present embodiment. As shown in FIG. 7, the method for producing a transparent substrate with a metal oxide layer according to the present embodiment includes the following step S101 to step S103.

(step S101) a step of preparing a transparent substrate having a first main surface and a second main surface
(step S 102) a step of bringing a part of the second main surface into contact with a jig and fixing the transparent substrate to the jig
(step S103) a step of forming a metal oxide layer on or above the first main surface and the second main surface by using a metal oxide layer raw material provided on a first main surface side

(Step S101)

The step S 101 is a step of preparing a transparent substrate having a first main surface and a second main surface, and a transparent substrate having the properties as mentioned in the above (Transparent Substrate) is prepared. The transparent substrate is preferably a glass substrate, and in the case where the transparent substrate is a glass substrate, the production method is not particularly limited. For example, the transparent substrate can be produced by charging a desired glass raw material into a melting furnace, heating and melting the same at 1500°C to 1600°C, refining the same, then supplying the molten glass to a molding device to mold the same into a plate shape, and performing slow cooling. Note that, a method for molding the transparent substrate is not particularly limited, and for example, a down-draw method (for example, an overflow down-draw method, a slot-down method, and a re-draw method), a float glass method, a roll-out method, and a pressing method can be used.

In the case where a glass substrate is used as the transparent substrate, a chemical strengthening treatment is preferably performed in order to increase the strength of the obtained substrate. The chemical strengthening treatment method is not particularly limited, and the main surface of the transparent substrate is subjected to ion exchange to form a surface layer in which the compressive stress remains. Specifically, at a temperature equal to or lower than the glass transition point, alkali metal ions having a small ionic radius (for example, Li ions or Na ions) contained in the glass near the main surface of the substrate are substituted with alkali metal ions having a larger ionic radius (for example, Na ions or K ions for Li ions, and K ions for Na ions). Accordingly, the compressive stress remains on the main surface of the transparent substrate, and the strength of the transparent substrate is improved.

(Step S102)

The step S 102 is a step of bringing a part of the second main surface into contact with a jig and fixing the transparent substrate to the jig. FIG. 6A is a schematic diagram showing the state where the second main surface 10b of the transparent substrate 10 is brought into contact with a jig 60 and the transparent substrate 10 is fixed in the step S 102. At this time, the first main surface 10a is provided to face a metal oxide layer raw material 61 to be formed in the step S103. Note that, in this step, a protective film is not provided on the second main surface 10b, and the second main surface 10b is in direct contact with the jig.

A method of bringing the jig 60 into contact with the second main surface 10b of the transparent substrate 10 and a method of fixing the transparent substrate 10 are not particularly limited. For example, suction fixing, electromagnetic fixing, or fixing with an adhesive can be used. In the case of fixing with an adhesive, a material that does not increase the contact angle, for example, an acrylic adhesive, is preferred.

A thickness of the jig 60 is preferably 1 mm or more, and more preferably 3 mm or more. When the thickness of the jig 60 is within this range, the second metal oxide layer 1 1b can be uniformly formed on the second main surface 10b. On the other hand, when the thickness of the jig 60 is preferably 20 mm or less, and more preferably 10 mm or less, a distance between a target and a workpiece can be ensured.

An area of the jig 60 in contact with the second main surface 10b is preferably 50% or less of the area of the second main surface 10b. It is more preferably 40% or less, and still more preferably 30% or less. When the area of the jig 60 in contact with the second main surface 10b is within this range, the second metal oxide layer 11b can be formed in a sufficient area on the second main surface 10b, and bonding defects with a display can be easily eliminated.

On the other hand, the area of the jig 60 in contact with the second main surface 10b is preferably 5% or more, more preferably 10% or more, and still more preferably 15% or more of the area of the second main surface 10b. When the area of the jig 60 in contact with the second main surface 10b is within this range, the transparent substrate 10 can be sufficiently fixed by the jig 60.

The providing position of the jig 60 is not particularly limited, and may be, for example, at the center of the second main surface 10b, or at the periphery portion of the second main surface 10b.

The number of the jig 60 is not particularly limited, and may be one or more. Note that, in the case where a plurality of jigs 60 are provided, the area of the jig 60 in contact with the second main surface 10b means the total area the plurality of jigs in contact therewith.

The shape of the jig 60 is not particularly limited, and may be, for example, rectangular, circular, elliptical, or polygonal.

The jig 60 may also be held in any method. For example, it may be fixed to a wall surface within a film formation device or may be fixed to a transportable carrier substrate, and the distance from the metal oxide layer raw material 61 can be maintained at any distance.

(Step S103)

The step S103 is a step of forming a metal oxide layer on or above the first main surface and the second main surface by using a metal oxide layer raw material provided on a first main surface side. FIG. 6B is a schematic diagram showing the state where a metal oxide layer is formed on the first main surface 10a, the second main surface 10b, and the side surface 10c by using the metal oxide layer raw material 61 provided to face the first main surface 10a.

In the step S103, the first metal oxide layer 11a is formed on the first main surface 10a of the transparent substrate 10, and the metal oxide layer raw material 61 gets around during film formation, whereby the second metal oxide layer 11b is formed on the second main surface, and the metal oxide layer 11c is formed on the side surface 10c.

The first metal oxide layer 11a is formed, for example, as an antireflection layer, and is formed to have a thickness of 200 nm or more and 400 nm or less. When the thickness of the first metal oxide layer 11a is within this range, the luminous reflectance of the transparent substrate can be sufficiently reduced. Note that, even in the case where the first metal oxide layer 11a is an antireflection layer, the second metal oxide layer 11b and the metal oxide layer 11c on the side surface 10c formed by the raw material 61 getting around do not necessarily have a function as an antireflection layer.

The second metal oxide layer 11b is formed to have a thickness more than 0% and less than 5.0% of the thickness of the first metal oxide layer 11a. When the thickness of the second metal oxide layer 11b is within this range, the contact angle on the second main surface 10b can be reduced to eliminate bonding defects with a display, and an increase in luminous reflectance of the transparent substrate 10 can be prevented. In addition, in the production method according to the present embodiment, the second metal oxide layer is not formed in a region where the second main surface is in contact with the jig. However, when the thickness of the second metal oxide layer 11b is within the above range, the color difference between the region where the second metal oxide layer is not present and the region where the second metal oxide layer is present can be prevented.

The thickness of the second metal oxide layer 11b is preferably 0.1% or more, and more preferably 1.0% or more of the thickness of the first metal oxide layer 11a. When the thickness of the second metal oxide layer 11b is within this range, on the second main surface 10b, the second metal oxide layer 11b can be formed evenly, and occurrence of the bonding defects with a display can be easily prevented. On the other hand, the thickness of the second metal oxide layer 11b is preferably 4.0% or less, more preferably 3.0% or less, and still more preferably 2.0% or less of the thickness of the first metal oxide layer 11a. When the thickness of the second metal oxide layer 11b is within this range, an increase in luminous reflectance of the transparent substrate 10 can be prevented.

Note that, the thickness of the second metal oxide layer can be adjusted by changing the inclination of the transparent substrate, the thickness of the jig 60, and gas pressure conditions during film formation.

The film formation method is not particularly limited, and various film formation methods can be used. For example, physical vapor deposition methods such as a vacuum deposition method, an ion beam assisted deposition method, an ion plate method, a sputtering method, or a plasma CVD method can be used. Among these film formation methods, use of a sputtering method is preferred since a dense and highly durable film can be formed. Particularly, it is preferable to form the film by a sputtering method such as a pulse sputtering method, an AC sputtering method, and a digital sputtering method.

For example, in the case of forming a metal oxide layer by a pulse sputtering method, a transparent substrate is disposed in a chamber containing a mixed gas atmosphere of an inert gas and an oxygen gas, and the metal oxide layer raw material 61 is selected to have a desired composition, and is used as a target to form a film. At this time, the type of the inert gas in the chamber is not particularly limited, and various inert gases such as argon and helium can be used.

Each metal oxide layer is preferably formed to have a structure in which a high refractive index layer and a low refractive index layer are laminated as described above. The metal oxide layer raw material 61 may be selected to contain the above material for each layer. The lamination method is not particularly limited, and examples thereof include a method of providing a transparent substrate on an outer surface of a cylindrical drum, providing raw materials for respective layers on an inner surface of a cylindrical side wall that surrounds the drum, and forming a film while rotating the drum to laminate layers on or above the transparent substrate (hereinafter, referred to as a rotation method), and a method of flowing a transparent substrate in one direction, providing raw materials for respective layer on a side wall of the transparent substrate parallel to a flow direction, on a side facing the transparent substrate, to form a film to laminate layers on or above the transparent substrate (hereinafter, referred to as a flowing method). Among these, a flowing method is preferred since it facilitates making the thickness of the second metal oxide layer 11b on or above the second main surface uniform.

In the case where the high refractive index layer and the low refractive index layer are formed by a pulse sputtering method, a layer thickness of each layer can be adjusted by, for example, adjusting a discharge power or adjusting a film formation time.

(Other Methods for Forming Metal Oxide Layer)

In the above production method, the first metal oxide layer 11a and the second metal oxide layer 11b are formed at once. In preparation of the transparent substrate with a metal oxide layer according to the present embodiment, the first metal oxide layer 11a and the second metal oxide layer 11b may be formed in separate steps.

(Step of Forming Printed Layer)

The production method according to the present embodiment may further include a step of forming the printed layer 21 between the step S101 and the step S102. The printed layer 21 may be formed with the above configuration. Examples of a printing method include a bar coating method, a reverse coating method, a gravure coating method, a die coating method, a roll coating method, a screen method, an inkjet method, and a transfer decoration method. A screen printing method is preferred since the printing can be easy, can be performed on various base materials, and can be performed to match the size of the transparent substrate 10.

(Step of Forming Antifouling Layer)

The production method according to the present embodiment may further include a step of forming an antifouling layer after the step S 103.
For example, the transparent substrate 10 on which the metal oxide layer is formed is transported while being fixed to the jig 60, and an antifouling layer forming step is performed to form an antifouling layer on or above the metal oxide layer. More specifically, the first antifouling layer 31a is formed on or above the first metal oxide layer 11a, the second antifouling layer 31b is formed on or above the second metal oxide layer 11b, and the antifouling layer 31c is formed on or above the metal oxide layer 11c formed on the side surface. According to this method, the second main surface 10b is fixed to the jig 60 and the metal oxide layer is formed, and then the antifouling layer can be formed while the second main surface 10b is fixed to the jig 60, so that it can be produced by a simple method.
The thickness of the first antifouling layer 31a is preferably 2 nm or more and 20 nm or less, more preferably 2 nm or more and 15 nm or less, still more preferably 2 nm or more and 10 nm or less, even more preferably 2 nm or more and 8 nm or less, particularly preferably 2 nm or more and 6 nm or less, and extremely preferably 4 nm. When the thickness is 2 nm or more, the first main surface 10a is uniformly covered with the first antifouling layer 31a, which makes it practical from the viewpoint of scratch resistance. When the thickness is 20 nm or less, optical properties of the transparent substrate 10 with the first antifouling layer 31a formed thereon, such as a haze value, are favorable.
In the case where the second main surface 10b is fixed to the jig 60 and the metal oxide layer is formed, and then the antifouling layer is formed while the second main surface 10b is fixed to the jig 60, for example, the F/Si value is more than 0. On the other hand, the F/Si value is preferably 0.08 or less, and more preferably 0.05 or less. The closer it is to 0, the more preferred it is. When the F/Si value is within this range, the contact angle on the second main surface 10b can be reduced, and the bonding defects with a display can be prevented.
Note that, the antifouling layer may be formed only on or above the first main surface, for example. In this case, for example, after forming the metal oxide layer in the step S103, the transparent substrate 10 may be removed from the jig 60, and the antifouling layer may be formed again with a protective film bonded to the second main surface 10b. According to this method, an increase in contact angle on the second main surface can be prevented, and occurrence of the bonding defects with a display can be easily prevented.
As a film formation method for the antifouling layer, any of dry methods such as a vacuum deposition method, an ion beam assisted deposition method, an ion plate method, a sputtering method, and a plasma CVD method, and wet methods such as a spin coating method, a dip coating method, a cast method, a slit coating method, and a spray method can be used. Preferably, a vacuum deposition method is used.
In this way, a film formation composition containing a fluorine-containing hydrolyzable silicon compound adheres on the metal oxide layer of the transparent substrate 10. Further, at the same time with or after the adhesion, the fluorine-containing hydrolyzable silicon compound undergoes a hydrolytic condensation reaction, thereby chemically bonding to the metal oxide layer and forming siloxane bonds between molecules to form a fluorine-containing organosilicon compound film.

(Step of Forming Antiglare Layer)

The production method according to the present embodiment may further include a step of forming an antiglare layer before the step S102. The antiglare layer is formed, for example, by subjecting the first main surface 10a to a surface treatment using a chemical method or a physical method to form an uneven shape with a desired surface roughness. In addition, it is formed by applying or spraying a coating liquid for an antiglare film onto the main surface of the first main surface 10a, depositing the antiglare film on the first main surface 10a, and imparting an uneven shape.
In the case where the transparent substrate 10 is a glass, the following antiglare treatment may be used, for example.
A specific example of the antiglare treatment using a chemical method is a method of performing a frost treatment. The frost treatment is performed, for example, by immersing the transparent substrate 10, which is an object to be treated, in a mixed solution containing hydrogen fluoride and ammonium fluoride.

As the antiglare treatment using a physical method, for example, a method by a so-called sandblast treatment in which a crystalline silicon dioxide powder, a silicon carbide powder, or the like is blown onto the surface of the transparent substrate 10 with pressurized air, or a method of polishing the surface of the transparent substrate 10 using a brush coated with a crystalline silicon dioxide powder, a silicon carbide powder, or the like, and moistened with water is performed.

Among these, a frost treatment, which is a chemical surface treatment, is preferably used since microcracks are less likely to occur on the surface of the object to be treated and the strength of the transparent substrate 10 is less likely to decrease.

As the antiglare treatment, a known wet coating method is used to apply a coating liquid for an antiglare film. A spray coating method, an electrostatic coating method, a spin coating method, a dip coating method, a die coating method, a curtain coating method, a screen coating method, an inkjet method, a flow coating method, a gravure coating method, a bar coating method, a flexo coating method, a slit coating method, a roll coating method, or the like can be used.

Among these, a spray coating method and an electrostatic coating method are excellent methods for depositing the antiglare film. Using a coating liquid for an antiglare film, the transparent substrate 10 can be treated with a spray device to form an antiglare film, and the transparent substrate 10 can be subjected to an antiglare treatment. According to the spray coating method, the haze value or the like can be changed over a wide range. This is because by freely changing the coating amount of the coating liquid and the material composition, it is possible to relatively easily prepare an uneven shape necessary to obtain the required properties. In particular, an electrostatic coating method is more preferable.

As described above, the following configurations are disclosed in the present description.

[1] A transparent substrate with a metal oxide layer, including:

a transparent substrate having a first main surface and a second main surface;
a first metal oxide layer on or above the first main surface; and
a second metal oxide layer on or above the second main surface, in which
the first metal oxide layer is an antireflection layer,
the first metal oxide layer has a thickness of 200 nm to 400 nm, and
the second metal oxide layer has a thickness more than 0% and less than 5.0% of the thickness of the first metal oxide layer.

[2] The transparent substrate with a metal oxide layer according to [1], in which the second main surface has a region where the second metal oxide layer is present and a region where the second metal oxide layer is not present.

[3] The transparent substrate with a metal oxide layer according to [1] or [2], in which an area of the second metal oxide layer is 50% or more of an area of the second main surface.

[4] The transparent substrate with a metal oxide layer according to any one of [1] to [3], in which a printed layer is provided on a periphery portion of the second main surface, and the second metal oxide layer is present on most of the printed layer.

[5] The transparent substrate with a metal oxide layer according to [3], in which a printed layer is provided on a periphery portion of the second main surface, and the second metal oxide layer is present from the periphery portion of the second main surface to an inner side of an inner periphery of the printed layer on the second main surface.

[6] The transparent substrate with a metal oxide layer according to any one of [1] to [5], in which a metal oxide layer is provided on or above a side surface connecting the first main surface and the second main surface.

[7] The transparent substrate with a metal oxide layer according to any one of [1] to [6], in which a first antifouling layer is provided on or above the first metal oxide layer, and a second antifouling layer is provided on or above the second metal oxide layer.

[8] The transparent substrate with a metal oxide layer according to [7], in which the second main surface has a F/Si value of more than 0 and 0.08 or less, and
the F/Si value is obtained by dividing a F intensity value by a Si intensity value and is measured with an X-ray photoelectron spectrometer under the following conditions:
a source is Mg K$\alpha$; an output is 12 kV and 25 mA; a detection angle is 90°; a sample tilt is 0°; and a measurement area is about 6 mm$^2$.

[9] The transparent substrate with a metal oxide layer according to [2], in which a color difference $\Delta$E between the region where the second metal oxide layer is present and the region where the second metal oxide layer is not present is 1.5 or less.

[10] The transparent substrate with a metal oxide layer according to any one of [1] to [9], in which the second main surface is a surface to be bonded to a display.

[11] The transparent substrate with a metal oxide layer according to any one of [1] to [10], in which the first metal oxide layer has a laminated structure including 1 or more and 6 or less of high refractive index layers and low refractive index layers in total, each of the high refractive index layers and each of the low refractive index layers being laminated alternately, and a main component of each of the high refractive index layers is at least one selected from silicon nitride, titanium oxide, niobium oxide, tantalum oxide, and zirconium oxide.

[12] The transparent substrate with a metal oxide layer according to [7] or [8], in which the first antifouling layer and the second antifouling layer contain a compound containing fluorine.

[13] The transparent substrate with a metal oxide layer according to any one of [1] to [12], in which an antiglare layer is provided between the first main surface and the first metal oxide layer.

[14] The transparent substrate with a metal oxide layer according to any one of [1] to [13], in which the transparent substrate is a chemically strengthened glass.

[15] A display device including:

the transparent substrate with a metal oxide layer according to any one of [1] to [14]; and
a display, in which
a second main surface side is bonded to the display.

[16] A method for producing a transparent substrate with a metal oxide layer, including:

preparing a transparent substrate having a first main surface and a second main surface;
bringing a part of the second main surface into contact with a jig and fixing the transparent substrate to the jig; and
forming a first metal oxide layer on or above the first main surface and a second metal oxide layer on or above the second main surface by using a metal oxide layer raw material provided to face the first main surface, in which the formation is carried out such that the first metal oxide layer is an antireflection layer, the first metal oxide layer has a thickness of 200 nm to 400 nm, and the second metal oxide layer has a thickness more than 0% and less than 5.0% of the thickness of the first metal oxide layer.

[17] The method for producing a transparent substrate with a metal oxide layer according to [16], in which an area of the second main surface in contact with the jig is 50% or less of the second main surface.

[18] The method for producing a transparent substrate with a metal oxide layer according to [16] or [17], in which the jig has a thickness of 1 mm or more.

EXAMPLES

Next, Examples according to the present invention will be described. Note that, the present invention is not limited to the following examples. Example 1 to Example 3 are Inventive Examples of the present invention, and Example 4 and Example 5 are Comparative Examples. Table 1 shows sample conditions and evaluation results in Examples.

(Example 1)

As the transparent substrate, a rectangular plate-like transparent substrate (Dragontrail (registered trademark), manufactured by AGC, chemically strengthening aluminosilicate glass) having a thickness of 1.3 mm and a pair of facing main surfaces of 300 mm × 150 mm was used. The transparent substrate was subjected to the following procedure in order: (1) antiglare treatment, (2) chemical strengthening treatment, (3) formation of printed layer, (4) fixing to jig, and (5) formation of metal oxide layer, to obtain a transparent substrate with a metal oxide layer.

(1) Antiglare treatment

The first main surface of the transparent substrate (glass substrate) was subjected to an antiglare treatment by a frost treatment according to the following procedure. First, an acid-resistant protective film was bonded to the second main surface of the transparent substrate, which was not subjected to an antiglare treatment. Next, the glass substrate was immersed in a 3 mass% hydrogen fluoride aqueous solution for 3 minutes, and the surface of the first main surface of the glass substrate was etched to remove stains adhering to the surface. Next, the glass substrate was immersed in a mixed aqueous solution containing 15 mass% hydrogen fluoride and 15 mass% potassium fluoride for 3 minutes to perform a frost treatment on the first main surface of the glass substrate. The glass substrate was immersed in a 10 mass% hydrogen fluoride aqueous solution for 6 minutes to adjust the haze value of the surface of the first surface to 25%. Note that, the haze value was measured using a haze meter (product name: HZ-V3, manufactured by Suga Test Instruments Co., Ltd.) according to JIS K 7136:(2000).

(2) Chemical strengthening treatment

Next, the glass substrate was immersed for 2 hours in a potassium nitrate salt that had been heated and dissolved to 450°C. Thereafter, the glass substrate was lifted from the molten salt and slowly cooled to room temperature for 1 hour to obtain a chemically strengthened glass substrate. The chemically strengthened glass substrate thus obtained has a surface compressive stress (CS) of 730 MPa and a stress layer depth (DOL) of 30 $\mu$m.

(3) Formation of printed layer

A black frame having a width of 2 cm was subjected to printing on four peripheral sides of the second main surface by screen printing to form a black printed layer. First, a black ink (product name: GLSHF, manufactured by Teikoku Printing Inks Mfg. Co., Ltd.), as an organic ink containing a pigment, was applied using a screen printer, and then dried at 150°C to form a printed layer. Next, on the formed printed layer, the same black ink as above was applied by the same procedure as above, and then dried at 150°C to laminate a printed layer. In this way, a black printed layer was formed in which the first printed layer and the second printed layer were laminated, and a glass substrate having the black printed layer on the outer periphery of the second main surface was obtained.

(4) Fixing to jig

Next, a jig was fixed to the second main surface of the transparent substrate via an adhesive. Note that, at this time, no protective film was provided on the second main surface. An acrylic adhesive was used as the adhesive. The surface of the jig in contact with the second main surface had a rectangular shape of 50 mm × 25 mm, and corresponded to 85% of the area of the second main surface. The thickness of the jig was 9 cm. The surface of the jig that was not in contact with the second main surface was fixed to a carrier substrate that was larger than the transparent substrate. The carrier substrate was provided in a film formation chamber so as to face a sputtering target as a metal oxide layer raw material.

(5) Formation of metal oxide layer

Next, a metal oxide layer was formed by sputtering. In the film formation, in order to make the first metal oxide layer function as an antireflection layer, conditions were adjusted such that the components and raw materials for each layer and the thickness of each layer were as shown in Table 1 below. Each layer was laminated using a flowing method. In the film formation, for each layer, sputtering was performed at a pressure of 0.3 Pa, a frequency of 20 kHz, a film formation power of 3.8 W/cm$^2$, and an inversion pulse width of 5 $\mu$sec while introducing a mixed gas containing an argon gas and 10 vol% of an oxygen gas into the chamber, and each layer was laminated on or above the first main surface. The total thickness of the first metal oxide layer formed was 250 nm, and the thickness of the second metal oxide layer formed was 4 nm, which was 1.6% of the thickness of the first metal oxide layer. In addition, a metal oxide layer was also formed on the side surface. Note that, the thickness of the first metal oxide layer was based on the result of monitoring using a crystal oscillator during film formation, and the thickness of the second metal oxide layer was determined by measuring the prepared sample at 9 points using a stylus surface profile measuring device (Dektak 150 manufactured by BRUKER) under the following conditions, and using the average value.

(Measurement Conditions for Thickness of Second Metal Oxide Layer)

Scanning distance: 3000 $\mu$m
Scanning time: 10 seconds
Needle pressure: 3.00 mg
Profile: mountain-valley mode

Table 1

| Configuration of each layer in first metal oxide layer (antireflection layer) | | | |
|---|---|---|---|
| | Refractive index | Component of each layer | Layer thickness [nm] |
| Outermost layer | Low | Silicon oxide | 87 |

(continued)

| Configuration of each layer in first metal oxide layer (antireflection layer) | | | |
|---|---|---|---|
| | Refractive index | Component of each layer | Layer thickness [nm] |
| Second layer | High | Niobium oxide | 119 |
| Third layer | Low | Silicon oxide | 38 |
| Fourth layer | High | Niobium oxide | 14 |

Through the above steps, a transparent substrate with a metal oxide layer in Example 1 was prepared.

(Example 2)

Example 2 was the same as Example 1 except that (6) formation of antifouling layer was performed.

(6) Formation of antifouling layer

An antifouling layer was formed on the metal oxide layer by using a vacuum deposition method. Note that, the transparent substrate remained fixed to the jig, and the carrier substrate to which the jig was fixed was directly transported to an antifouling layer formation chamber for use.

First, as a material for the antifouling layer, a material for forming a fluorine-containing organosilicon compound film was introduced into a heating container of the antifouling layer formation chamber. Thereafter, the inside of the heating container was degassed using a vacuum pump for 10 hours or longer to remove the solvent in the solution, and a composition for forming a fluorine-containing organosilicon compound film (hereinafter referred to as an antifouling layer formation composition) was obtained. KY-185 (manufactured by Shin-Etsu Chemical Co., Ltd.) was used as the antifouling layer formation composition.

Next, the heating container containing the antifouling layer formation composition was heated to 270°C. After reaching 270°C, this state was maintained for 10 minutes until the temperature stabilized. Next, the transparent substrate was placed into a vacuum chamber, and then the antifouling layer formation composition was supplied to the first main surface from a manifold connected to the heating container containing the antifouling layer formation composition to form a film.

The film formation was carried out while measuring the film thickness using a crystal oscillator monitor provided in the vacuum chamber until the thickness of the fluorine-containing organosilicon compound film on the first main surface reached 4 nm. Next, the transparent substrate taken out from the vacuum chamber was placed on a hot plate with the first main surface facing upward, and subjected to a heat treatment at 150°C for 60 minutes in the atmosphere.

Through the above steps, an antifouling layer was formed. The thickness of the formed first antifouling layer was 4 nm. The second antifouling layer had a thickness estimated to be 1 nm or less, and a F/Si value of 0.026 as measured by the following measurement method.

(Method for Measuring F/Si Value)

Measurement was performed under the following measurement conditions using JPS-9030 (manufactured by JEOL) as an X-ray photoelectron spectrometer (XPS). The value obtained by dividing the obtained F intensity value by Si intensity value is defined as the F/Si value.

(Measurement conditions)

Source: Mg K$\alpha$
Output: 12 kV, 25 mA
Detection angle: 90°
Sample tilt: 0°
Measurement area: about 6 mm$^2$

(Example 3)

Example 3 was the same as Example 1 except that in the formation of the metal oxide layer, the transparent substrate was provided to be tilted such that the thickness of the metal oxide layer on the second main surface was 6.5 nm to promote getting around.

(Example 4)

Example 4 was the same as Example 2 except that the metal oxide layer and the antifouling layer were formed in a state where a protective film was provided on the second main surface.

(Example 5)

Example 5 was the same as Example 1 except that the formation of the metal oxide layer was carried out under conditions that the transparent substrate was provided to be tilted such that the thickness of the metal oxide layer on the second main surface was 12.5 nm to promote getting around. In Example 5, the thickness of the metal oxide layer on the second main surface was 12.5 nm.

For each sample, the water contact angle, a hexadecane contact angle, an average color difference, and the luminous reflectance were evaluated. The conditions and evaluation results for each example are shown in Table 2 below.

(Method for Measuring Water Contact Angle)

Any 9 points were selected in each of the region where the printed layer was present and the region (opening) where the printed layer was not present on the second main surface, about 1.6 $\mu$L of distilled water was dropped thereto, and each water contact angle was measured using a contact angle meter (PCA-11 manufactured by Kyowa Interface Science Co., Ltd.) to determine the average value. Note that, the 9 points were selected such that there was no bias over the entire region of the opening.

(Method for Measuring Color Difference)

The spectral reflectance was obtained using a spectrophotometer (CM2600d, manufactured by Konica Minolta, Inc.) as a measuring device. Reflection colors (a*, b*) were determined based on the spectral reflectance.

First, the transparent substrate with a metal oxide layer was placed on a stand 30 cm or more from the floor with the second main surface facing downward in a hollow state that allowed measurement, and measurement was performed at the opening in the first main surface.

Next, any one point on the second main surface 10b selected from the region where the second metal oxide layer 11b was not present, and among the region where the second metal oxide layer 11b was present, any one point selected from, on the second main surface 10b, a region within 10 mm from the region where the second metal oxide layer 11b was not present were selected, reflection colors at two points on the first main surface corresponding to these two points were measured, and the color difference $\Delta E$ between the reflection colors (a*, b*) at the two points was determined by

$\Delta E = \{(\Delta L^*)^2+(\Delta a^*)^2+(\Delta b^*)^2\}^{1/2}$. Using the same method, $\Delta E$ was determined for a total of 9 sets of 18 points, and the average value was adopted.

(Method for Measuring Luminous Reflectance)

The transparent substrate with a metal oxide layer was placed on a stand 30 cm or more from the floor with the second main surface facing downward in a hollow state that allowed measurement, the spectral reflectance was measured in an SCI mode in the region of the first main surface facing the opening of the second main surface by using a spectrophotometer (CM2600d, manufactured by Konica Minolta, Inc.), and based on the spectral reflectance, the luminous reflectance (reflection stimulation value Y specified in JIS Z 8701: (1999)) was determined. The color reflectance was measured at 9 points and the average value was used. The 9 points were selected such that there was no bias over the entire region of the opening.

Table 2

| | | | Example 1 | Example 2 | Example 3 | Example 4 | Example 5 |
|---|---|---|---|---|---|---|---|
| Production method | Jig | Area [%] on second main surface | 85 | 85 | 85 | 0 | 85 |
| | | Thickness [cm] | 9.0 | 9.0 | 9.0 | 0.0 | 9.0 |
| Film configuration | First main surface | Metal oxide layer — Thickness [nm] | 250 | 250 | 250 | 250 | 250 |
| | | AFP — Thickness [nm] | 0 | 4.0 | 0 | 4.0 | 0 |
| | Second main surface | Metal oxide layer — Thickness [nm] | 4.0 | 4.0 | 6.5 | 0 | 12.5 |
| | | Metal oxide layer — Thickness (proportion [%] to first main surface) | 1.6 | 1.6 | 2.5 | 0 | 5.0 |
| | | AFP — F/Si | 0 | 0.026 | 0 | 0.015 | 0 |
| Evaluation result | Water contact angle maximum value [°] | Opening | ≤ 4 | 30 | ≤ 4 | 67 | ≤ 4 |
| | | Printed layer | ≤ 4 | 29 | ≤ 4 | 89 | ≤ 4 |
| | Color difference ΔE | | 0.5 | 0.5 | 1.3 | 0.3 | 4.2 |
| | Reflectance [%] | | 4.3 | 4.3 | 4.6 | 4.2 | 9.4 |

As can be seen from Table 2, in Examples 1 to 3, the second metal oxide layer is formed on the second main surface, and the thickness of the second metal oxide layer is less than 5.0% of the thickness of the first metal oxide layer, so that the maximum value of the water contact angle can be reduced to 50° or less, the luminous reflectance can be reduced to 5.0% or less, and the color difference ΔE on the first main surface can be reduced to 1.5 or less. In particular, in Examples 1 and 2, the color difference ΔE can be reduced to 0.8 or less by setting the thickness of the second metal oxide layer to 2.0% or less.

On the other hand, in Example 5, the thickness of the second metal oxide layer is 5.0% or more of the thickness of the first metal oxide layer, so that the color difference ΔE on the first main surface is 1.5 or more, and the luminous reflectance is 5.0% or more. In Example 4, the second metal oxide layer is not formed and the F/Si value on the second main surface is 0.015. In Example 4, since the protective film is provided on the second main surface, no metal oxide layer or antifouling layer is formed. The F/Si value on the second main surface is high due to the fluorine component derived from an adhesive component of the protective film, and the contact angle on the second main surface is high due to the adhesion of a carbon component derived from the adhesive component of the protective film. The contact angle is particularly high in the region above the printed layer.

Note that, in Example 2 in which the antifouling layer is formed, since the second metal oxide layer is formed, and the F/Si value on the second main surface is 0.08 or less, so that the maximum value of the water contact angle can be reduced to 50° or less.

Although the present invention has been described in detail with reference to specific embodiments, it is apparent to those skilled in the art that various changes and modifications can be made without departing from the spirit and scope of the present invention. The present application is based on a Japanese Patent Application (No. 2021-192511) filed on November 26, 2021, the contents which are incorporated herein by reference.

REFERENCE SIGNS LIST

10: transparent substrate
10a: first main surface of transparent substrate

10b: second main surface of transparent substrate

10c: side surface of transparent substrate

11a: first metal oxide layer

11b: second metal oxide layer

11c: metal oxide layer on side surface of transparent substrate

21: printed layer

31a: first antifouling layer

31b: second antifouling layer

31c :antifouling layer on side surface of transparent substrate

60: jig

61: metal oxide layer raw material

101 to 105: transparent substrate with metal oxide layer

## Claims

1. A transparent substrate with a metal oxide layer, comprising:

   a transparent substrate having a first main surface and a second main surface;
   a first metal oxide layer on or above the first main surface; and
   a second metal oxide layer on or above the second main surface, wherein
   the first metal oxide layer is an antireflection layer,
   the first metal oxide layer has a thickness of 200 nm to 400 nm, and
   the second metal oxide layer has a thickness more than 0% and less than 5.0% of the thickness of the first metal oxide layer.

2. The transparent substrate with a metal oxide layer according to claim 1, wherein the second main surface has a region where the second metal oxide layer is present and a region where the second metal oxide layer is not present.

3. The transparent substrate with a metal oxide layer according to claim 1, wherein an area of the second metal oxide layer is 50% or more of an area of the second main surface.

4. The transparent substrate with a metal oxide layer according to claim 1, wherein a printed layer is provided on a periphery portion of the second main surface, and
   the second metal oxide layer is present on most of the printed layer.

5. The transparent substrate with a metal oxide layer according to claim 3, wherein a printed layer is provided on a periphery portion of the second main surface, and
   the second metal oxide layer is present from the periphery portion of the second main surface to an inner side of an inner periphery of the printed layer on the second main surface.

6. The transparent substrate with a metal oxide layer according to claim 1, wherein a metal oxide layer is provided on or above a side surface connecting the first main surface and the second main surface.

7. The transparent substrate with a metal oxide layer according to claim 1, wherein a first antifouling layer is provided on or above the first metal oxide layer, and
   a second antifouling layer is provided on or above the second metal oxide layer.

8. The transparent substrate with a metal oxide layer according to claim 7, wherein the second main surface has a F/Si value of more than 0 and 0.08 or less, and
   the F/Si value is obtained by dividing a F intensity value by a Si intensity value and is measured with an X-ray photoelectron spectrometer under the following conditions:
   a source is Mg $K\alpha$; an output is 12 kV and 25 mA; a detection angle is 90°; a sample tilt is 0°; and a measurement area is about 6 $mm^2$.

9. The transparent substrate with a metal oxide layer according to claim 2, wherein a color difference $\Delta E$ between the region where the second metal oxide layer is present and the region where the second metal oxide layer is not present is 1.5 or less.

10. The transparent substrate with a metal oxide layer according to claim 1, wherein the second main surface is a surface to be bonded to a display.

11. The transparent substrate with a metal oxide layer according to claim 1, wherein the first metal oxide layer has a laminated structure comprising 1 or more and 6 or less of high refractive index layers and 1 or more and 6 or less of low refractive index layers, each of the high refractive index layers and each of the low refractive index layers being laminated alternately, and
a main component of each of the high refractive index layers is at least one selected from silicon nitride, titanium oxide, niobium oxide, tantalum oxide, and zirconium oxide.

12. The transparent substrate with a metal oxide layer according to claim 7, wherein the first antifouling layer and the second antifouling layer comprise a compound comprising fluorine.

13. The transparent substrate with a metal oxide layer according to claim 1, wherein an antiglare layer is provided between the first main surface and the first metal oxide layer.

14. The transparent substrate with a metal oxide layer according to claim 1, wherein the transparent substrate is a chemically strengthened glass.

15. A display device comprising:

    the transparent substrate with a metal oxide layer according to any one of claims 1 to 14; and
    a display, wherein
    a second main surface side is bonded to the display.

16. A method for producing a transparent substrate with a metal oxide layer, comprising:

    preparing a transparent substrate having a first main surface and a second main surface;
    bringing a part of the second main surface into contact with a jig and fixing the transparent substrate to the jig; and
    forming a first metal oxide layer on or above the first main surface and a second metal oxide layer on or above the second main surface by using a metal oxide layer raw material provided to face the first main surface, wherein the formation is carried out such that the first metal oxide layer is an antireflection layer, the first metal oxide layer has a thickness of 200 nm to 400 nm, and the second metal oxide layer has a thickness more than 0% and less than 5.0% of the thickness of the first metal oxide layer.

17. The method for producing a transparent substrate with a metal oxide layer according to claim 16, wherein an area of the second main surface in contact with the jig is 50% or less of the second main surface.

18. The method for producing a transparent substrate with a metal oxide layer according to claim 16 or 17, wherein the jig has a thickness of 1 mm or more.

*FIG. 1*

*FIG. 2*

## FIG. 3

## FIG. 4

## FIG. 5

## FIG. 6A

## FIG. 6B

## FIG. 7

S101 | STEP OF PREPARING TRANSPARENT SUBSTRATE

S102 | STEP OF BRINGING PART OF SECOND MAIN SURFACE INTO CONTACT WITH JIG AND FIXING TRANSPARENT SUBSTRATE TO JIG

S103 | STEP OF FORMING ANTIREFLECTION LAYER ON OR ABOVE FIRST MAIN SURFACE AND SECOND MAIN SURFACE

## INTERNATIONAL SEARCH REPORT

| International application No. |
| --- |
| **PCT/JP2022/043072** |

**A. CLASSIFICATION OF SUBJECT MATTER**

*G02B 1/115*(2015.01)i; *C03C 17/34*(2006.01)i; *C03C 17/42*(2006.01)i; *G02B 1/18*(2015.01)i; *G02B 5/02*(2006.01)i; *G09F 9/00*(2006.01)i
FI: G02B1/115; C03C17/34 Z; C03C17/42; G02B1/18; G02B5/02 C; G09F9/00 302; G09F9/00 313; G09F9/00 338

According to International Patent Classification (IPC) or to both national classification and IPC

**B. FIELDS SEARCHED**

Minimum documentation searched (classification system followed by classification symbols)

G02B1/115; C03C17/34; C03C17/42; G02B1/18; G02B5/02; G09F9/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2006/121102 A1 (SANYO ELECTRIC CO., LTD.) 16 November 2006 (2006-11-16) paragraph [0123], fig. 1 | 1-3, 6, 9-11, 13, 15-18 |
| Y | | 4, 5, 7, 8, 12, 14 |
| X | JP 2008-152085 A (HOYA CORP.) 03 July 2008 (2008-07-03) paragraphs [0044], [0046], [0076], [0077], [0095], [0096], [0111], fig. 6 | 1-3, 6-9, 10-13, 15-18 |
| Y | | 4, 5, 7, 8, 12, 14 |
| Y | WO 2015/125498 A1 (CANON OPTRON INC.) 27 August 2015 (2015-08-27) paragraphs [0054], [0055] | 4, 5, 7, 8, 12, 14 |

☐ Further documents are listed in the continuation of Box C.    ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **12 December 2022** | **14 February 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2022/043072**

| Patent document cited in search report | | | Publication date (day/month/year) | Patent family member(s) | | | Publication date (day/month/year) |
|---|---|---|---|---|---|---|---|
| WO | 2006/121102 | A1 | 16 November 2006 | US 2009/0046379 A1 paragraph [0212], fig. 1 CN 101019044 A | | | |
| JP | 2008-152085 | A | 03 July 2008 | (Family: none) | | | |
| WO | 2015/125498 | A1 | 27 August 2015 | (Family: none) | | | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018083748 A
- WO 2016068112 A
- JP 2021192511 A

**Non-patent literature cited in the description**

- Academic Thin Films and Film Forming Technology. **LEE JEONG-JUNG.** ULVAC. AGNE Technology Center, 2002